# EUROPEAN PATENT APPLICATION

(11) **EP 1 435 571 A1**
(43) Date of publication of application: **07.07.2004**
(21) Application number: 03000012.9
(22) Date of filing: 02.01.2003
(51) Int. Cl.: G06F 9/445

(54) **Method for customizing computer booting procedure**

(71) Applicant: ELITEGROUP COMPUTER SYSTEMS CO.,LTD., Taipei (TW)
(72) Inventor: Lin, Nan Sheng, Wu Gu Hsiang, Taipei Hsien (TW); Chien, Yi-Min, Chi Tu District, Keelung City (TW)
(74) Representative: Viering, Jentschura & Partner

(57) **Abstract**

A method for customizing computer booting procedure is devised to read a specific multimedia file in a memory unit by a BIOS program after power on. The multimedia file is viewed or played by a built-in program or an external program. The memory unit is one of a memory block in video ROM, a special hard disk area formed in a partition procedure, a thumb drive and an optical disk drive. The method further comprises an editing step to store the multimedia file with a specific file name and a searching step to find the multimedia file with the specific file name for replay it.

## Description

### Field of the invention

The present invention relates to a method of customizing computer booting procedure, especially to a method of customizing computer booting procedure with multimedia effect.

### Background of the invention

In conventional boot process of computer, the processor is reset with content in DRAM being cleared and then the processor executes command from ROM BIOS code. The ROM BIOS performs a test of the central hardware to verify basic and then performs a video ROM test looking for video adapter ROM BIOS program contained on a video adapter found either on a card plugged into a slot or integrated into the motherboard. Once a proper video ROM is found, a boot image will be displayed on monitor. For example, a logo of energy star will be displayed on a corner of the monitor. If the BIOS is Plug and Play (PnP), the PnP devices are searched and the detected PnP devices and other hardware information are shown on the monitor. If the computer is operated with Window operation system, the LOGO.SYS file is loaded and displays a startup image onscreen.

In above boot process, the onscreen contents display mostly about hardware information. However, the onscreen contents display momently and user generally checks hardware information in control panel of the Windows system. The boot onscreen display is dull for general user.

Some software or tools are developed to enable user to modify the displayed image in boot process. However, the software can only modify the logo of energy star, which is a small image and cannot help for visual effect.

US Pat. No. 6,373,498 discloses a method for displaying images during boot-up and shutdown. By that method, user can download image from website and modify the contents of LOGOS.SYS, LOGOW.SYS, LOGO.SYS. However, this method is only suitable for computer with Windows operation system and not suitable to computer multi bootable with different OS.

It is an object of the present invention to provide a user-customized and flexible method for computer booting procedure, therefore the computer can be booted with multimedia effect such as graphic, movie and audio effect.

### Summary of the invention

It is an object of the present invention to provide an OS-independent method for computer booting procedure.

To achieve above objects, the present invention provides a method for customizing computer booting procedure, which reads a specific multimedia file in a memory unit by a BIOS program after power on. The multimedia file is viewed or played by a built-in program or an external program. The memory unit is one of a memory block in video ROM, a special hard disk area formed in a partition procedure, a thumb drive and an optical disk drive. The method further comprises an editing step to store the multimedia file with a specific file name and a searching step to find the multimedia file with the specific file name for replay it.

The various objects and advantages of the present invention will be more readily understood from the following detailed description when read in conjunction with the appended drawing, in which:

### Brief description of drawing:

Fig. 1 shows a flowchart of a first preferred embodiment of the present invention;
Fig. 2 shows a flowchart of a second preferred embodiment of the present invention; and
Fig. 3 shows a flowchart of a third preferred embodiment of the present invention.

### Detailed description of the invention

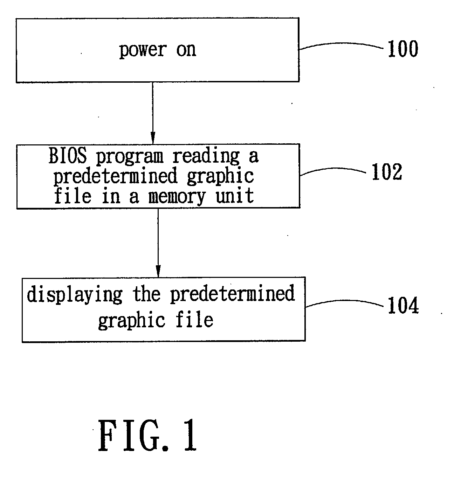

Fig. 1 shows a flowchart of a first preferred embodiment of the present invention, the method for providing customized booting procedure comprises following steps:
S100 power on;
S102 BIOS program reading a predetermined graphic file in a memory unit; and
S104 displaying the predetermined graphic file.

In above step S102, the memory unit can be a memory block in video ROM, a special hard disk area formed in a partition procedure, a thumb drive or an optical disk drive. The predetermined graphic file can be of standard computer-accessible format such as BMP, JPG, GIF, DIB, PCX or TIF. In step S104, a standard graphic-viewing program (external program) can be called to view the predetermined graphic file. Alternatively, a dedicated program (built-in program) can be incorporated in the BIOS program to view the predetermined graphic file. Moreover, the predetermined graphic file can also be stored in the random accessing memory of the video card to display the customized boot image.

Moreover, in case that the memory unit is a special hard disk area formed in a partition procedure, the method further comprises an editing step of providing a tool program to store the predetermined graphic file in the special hard disk area with a specific name. During boot process, the BIOS will scan the file allocation table of the hard disk and find the name of predetermined graphic file. Therefore, the built-in program or the external program can be used to view the predetermined graphic file with specific name.

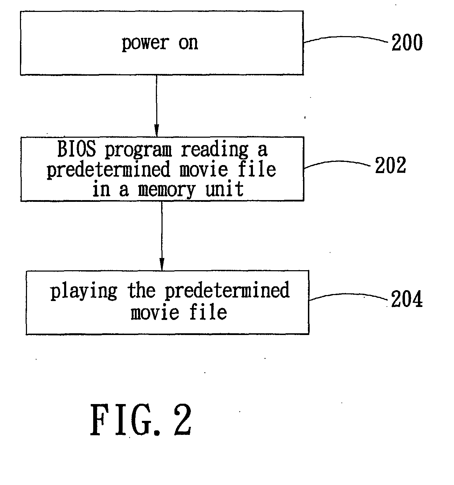

Fig. 2 shows a flowchart of a second preferred embodiment of the present invention, the method for providing customized booting procedure comprises following steps:
S200 power on;
S202 BIOS program reading a predetermined movie file in a memory unit; and
S204 playing the predetermined movie file.

In above step S202, the memory unit can be a memory block in video ROM, a special hard disk area formed in a partition procedure, a thumb drive or an optical disk drive. The predetermined movie file can be of standard computer-accessible format such as MOV, VCD, MPEG, VOB, DAT or WMV. In step S204, a standard movie-playing program (external program) can be called to play the predetermined movie file. Alternatively, a dedicated program (built-in program) can be incorporated in the BIOS program to play the predetermined movie file.

Moreover, in case that the memory unit is a special hard disk area formed in a partition procedure, the method further comprises an editing step of providing a tool program to store the predetermined movie file in the special hard disk area with a specific name. During boot process, the BIOS will scan the file allocation table of the hard disk and find the name of predetermined movie file. Therefore, the built-in program or the external program can be used to play the predetermined movie file with specific name.

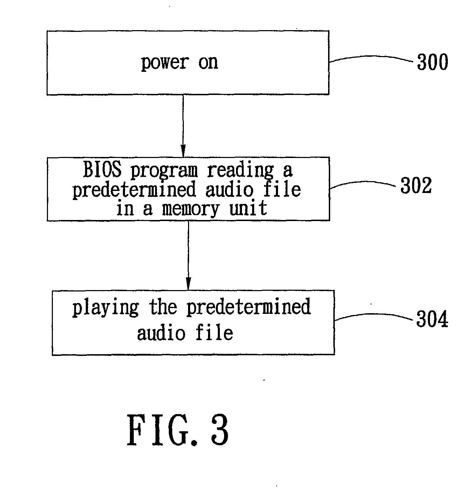

Fig. 3 shows a flowchart of a second preferred embodiment of the present invention, the method for providing customized booting procedure comprises following steps:
S300 power on;
S302 BIOS program reading a predetermined audio file in a memory unit; and
S304 playing the predetermined audio file.

In above step S302, the memory unit can be a memory block in audio ROM, a special hard disk area formed in a partition procedure; a thumb drive or an optical disk drive. The predetermined audio file can be of standard computer-accessible format such as WAV, MP3, MIDI or ASF. In step S304, a standard audio-playing program (external program) can be called to play the predetermined audio file. Alternatively, a dedicated program (built-in program) can be incorporated in the BIOS program to play the predetermined audio file.

Moreover, in case that the memory unit is a special hard disk area formed in a partition procedure, the method further comprises an editing step of providing a tool program to store the predetermined movie file in the special hard disk area with a specific name. During boot process, the BIOS will scan the file allocation table of the hard disk and find the name of predetermined audio file. Therefore, the built-in program or the external program can be used to play the predetermined audio file with specific name.

Although the present invention has been described with reference to the preferred embodiment thereof, it will be understood that the invention is not limited to the details thereof. Various substitutions and modifications have suggested in the foregoing description, and other will occur to those of ordinary skill in the art. Therefore, all such substitutions and modifications are intended to be embraced within the scope of the invention as defined in the appended claims.

## Claims

1. A method for customizing computer booting procedure, comprising following steps:
(a). power on;
(b) BIOS program reading a predetermined multimedia file in a memory unit; and
(c) playing the multimedia file.

2. The method for customizing computer booting procedure as in claim 1, wherein the multimedia file is a graphic file.

3. The method for customizing computer booting procedure as in claim 2, wherein the memory unit is one of a memory block in video ROM, a special hard disk area formed in a partition procedure, a thumb drive and an optical disk drive.

4. The method for customizing computer booting procedure as in claim 2, wherein the graphic file is one of BMP, JPG, GIF, DIB, PCX or TIF file.

5. The method for customizing computer booting procedure as in claim 2, further comprising an editing step to store the graphic file with a specific file name.

6. The method for customizing computer booting procedure as in claim 5, further comprising a searching step in step (b) to find the graphic file with the specific file name.

7. The method for customizing computer booting procedure as in claim 1, wherein the multimedia file is a movie file.

8. The method for customizing computer booting procedure as in claim 7, wherein the memory unit is one of a memory block in video ROM, a special hard disk area formed in a partition procedure, a thumb drive and an optical disk drive.

9. The method for customizing computer booting procedure as in claim 7, wherein the movie file is one of MOV, VCD, MPEG, VOB, DAT or WMV file.

10. The method for customizing computer booting procedure as in claim 7, further comprising an editing step to store the movie file with a specific file name.

11. The method for customizing computer booting procedure as in claim 10, further comprising a searching step in step (b) to find the movie file with the specific file name.

12. The method for customizing computer booting procedure as in claim 1, wherein the multimedia file is an audio file.

13. The method for customizing computer booting procedure as in claim 12, wherein the memory unit is one of a memory block in audio ROM, a special hard disk area formed in a partition procedure, a thumb drive and an optical disk drive.

14. The method for customizing computer booting procedure as in claim 12, wherein the movie file is one of WAV, MP3, MIDI or ASF file.

15. The method for customizing computer booting procedure as in claim 12, further comprising an editing step to store the audio file with a specific file name.

16. The method for customizing computer booting procedure as in claim 10, further comprising a searching step in step (b) to find the audio file with the specific file name.
